# EUROPEAN PATENT APPLICATION

(11) **EP 4 610 947 A1**
(43) Date of publication of application: **03.09.2025**
(21) Application number: 24160027.9
(22) Date of filing: 27.02.2024
(51) Int. Cl.: G06V 20/59

(54) **SYSTEM, METHOD AND SOFTWARE FOR PROCESSING VEHICLE OCCUPANT DATA**

(71) Applicant: Aptiv Technologies AG, 8200 Schaffhausen (CH)
(72) Inventor: BARTH, Alexander, 2939 Schaffhausen (CH); PAZEKHA, Stepan, 2939 Schaffhausen (CH); HOLLEMANN, Roland, 2939 Schaffhausen (CH)
(74) Representative: Lewis Silkin LLP

(57) **Abstract**

System for processing vehicle occupant data, the system comprising a plurality of vehicle inputs (106) for receiving information associated with the vehicle (102), wherein at least one of the plurality of vehicle inputs (106) includes an input from an interior cabin camera (108); a controller (110) for processing the vehicle information. The controller (110) includes a characteristic determination block for determining occupant characteristics associated with a vehicle occupant (104), wherein the one or more occupant characteristics include one or more clothing characteristics determined by processing images from the interior cabin camera (108). An occupant profile block builds an occupant profile based on determined occupant characteristics, and a preference selection block selects an occupant preference.

## Description

### Field

The present disclosure relates to a system, method and software for processing vehicle occupant data, such as characteristics of the colour or type of clothing worn by an occupant. The present disclosure is particularly relevant to systems for determining occupant characteristics, such as occupant clothing, as well as actioning preferences, such as interior lighting or colour display selections, in response to those determined characteristics.

### Background

User customisation is becoming increasingly important in modern vehicles. As vehicles incorporate greater amounts of electronics systems, the opportunities for controlling settings to affect a user's driving and journey experience increase. For instance, in some modern vehicles, everything from a vehicle's suspension, drive settings, power dynamics, lighting, colourways, infotainment theming, route setting preferences, heating/cooling, etc may be adjusted to suit a user's preferences. However, as more and more controls become available, it becomes more arduous for a user to select the preferences that best suit them. Furthermore, users may also want different settings when they are in different moods. For example, a user may prefer more sporty handling, a more aggressive power delivery and more vibrant interfaces and colourways when on a social drive, compared to their commute to work. Whilst some vehicles offer selected modes to fit these themes, these aren't intuitively implemented, and rely on a user to actively make suitable selections.

There are also potential safety factors arising from the above. Whilst vehicles may detect rain or cold conditions which may influence driving, a user's mood may also influence their driving confidence. For instance, if a user doesn't feel particularly confident because of other factors, settings which provide a more aggressive driving style may unnecessarily increase safety risks, even if the weather conditions are otherwise good.

In view of the above, there is a need for systems which can more easily provide a user with a driving experience which matches their preferences.

### Summary

According to a first aspect, there is provided a system for processing vehicle occupant data, the system comprising: a plurality of vehicle inputs for receiving information associated with the vehicle, wherein at least one of the plurality of vehicle inputs includes an input from an interior cabin camera; a controller for processing the vehicle information from the plurality of vehicle inputs, and comprising functional blocks for performing processing functions, the functional blocks comprising: a characteristic determination block for determining, from the plurality of vehicle inputs, one or more occupant characteristics associated with a vehicle occupant, wherein the one or more occupant characteristics include one or more clothing characteristics associated with a vehicle occupant determined by processing images from the interior cabin camera; an occupant profile block for building an occupant profile based on determined occupant characteristics, the occupant profile comprising occupant preferences associated with the one or more occupant characteristics; and a preference selection block for selecting an occupant preference from an occupant profile based on one or more occupant characteristics determined by the determination block, wherein the occupant characteristic includes at least the one or more clothing characteristics.

In this way, information regarding a vehicle occupant, such as their characteristics and the settings they select when exhibiting these, can be collected over time to build a profile for that user. In particular, the clothing that an occupant is wearing, as well as other characteristics may be used by the system to select future preferences. The clothing of the vehicle occupant, such as its colour, type and style, is often a good indicator of their current mood and likely preferences. For instance, in a preferred embodiment, the colour of the occupants clothing is determined. An occupant may wear subdued colours for driving to work or to a meeting, and hence the system may identify this pattern in clothing choice and its association with the settings they select and the driving style they adopt when dressed in this way. For instance, a calm driving style and cool environment settings may be picked. Conversely, if an occupant is in a brightly coloured T-shirt and shorts, they may adopt very different preferences and driving styles. Furthermore, a particular colour top may indicate an occupant is traveling to see their favorite sports team and wishes to adopt a corresponding colour in the interior, and potentially also exterior, of their vehicle to signify their support. Equally, an occupant in a thick winter coat, may want cabin temperature adjusted. For example, the cabin temperature preference could be selected to not cause sweating in the thick clothing. Conversely, a person in lighter clothing and cold ambient temperature might prefer a higher heating setting. Equally, settings such as interior and exterior lighting may be adjusted to enhance contrast and aid their visibility based similarly on inferences from the clothing identified. Clothing characteristics may also be used to provide an indication of the age group of the occupant, which in turn may inform setting selections. Accordingly, with the claimed arrangement, a feed from a vehicle's internal camera can be processed to learn and respond to characteristics of the occupant or occupants. This information can be used along with other information such as the occupants pose/key body point position, eye movements, facial expressions, setting selections, driving actions to build a detailed occupant profile.

In embodiments, the occupant profile block updates the occupant profile over time based on determined occupant characteristics, and the preference selection block selects an occupant preference based on one or more currently detected occupant characteristics. In this way, the system provides for proactive selection of user preferences based on learned characteristics of the occupant. As such, preferences tailored to an individual may be provided without the potential distraction of the occupant having to manually select those.

In embodiments, the plurality of vehicle inputs further comprises at least one of a user interface of the vehicle, an audio sensor, a temperature sensor, a clock, a location service, a vehicle destination input, a further interior cabin camera and/or an exterior camera. In this way, a wide variety of occupant characteristics can be determined from the vehicle inputs to develop an awareness of an occupant's preferences and associations between characteristic behaviors. For instance, a preference of interior temperature selection may be built into the occupant profile. Equally, a preference based on a user operation on the vehicle user interface, such as internal lighting selections or other vehicle settings, may be built into the occupant profile.

In embodiments the occupant preferences are associated with vehicle settings and the occupant profile associates the one or more occupant characteristics with vehicle information from at least one other vehicle input indicating a vehicle setting. In this way correlations between particular clothing characteristics and other data can be combined to form more detailed preferences for the controller. This can enable more accurate commands to be generated which the user is more likely to find helpful.

In embodiments, the preference selection block selects the occupant preference by comparing a determined clothing characteristic to the occupant profile to select an occupant preference from the occupant profile. In this way, a current clothing characteristic of the occupant, such as the colour, style or type of clothing, can be compared to a stored occupant profile to identify previous preference selections associated with that clothing characteristic or similar characteristics. The command generated therefore may be based directly on a preference related to the clothes the occupant is currently wearing.

In embodiments, the preference selection block is configured to generate a command for the selected occupant preference. In this way, the settings controlling the operation of the vehicle may be tailored to the occupant's preferences based on the prevailing determined characteristics.

In embodiments, the preference selection block is configured to transmit the command for controlling one or more vehicle settings of the vehicle. In embodiments, a report associated with the current characteristic is generated and sent to an external server. In this way, an external server can determine actions based on the occupant preferences and the clothing characteristics of the occupant. This may be beneficial for setting one or more settings outside the vehicle or for generating further occupant preferences using data external to the vehicle.

In embodiments, the controller further comprises a feedback block for detecting an occupant's response to the generated command. In this way, selections can be improved over time.

In embodiments, one of the occupant characteristics determined from at least one of the plurality of vehicle inputs comprises the user's response to the generated command. In this way, the feedback from the occupant can be used to generate further occupant preferences in the profile builder block.

In embodiments, the clothing characteristics comprise at least one of: clothing colour, clothing type, and clothing style. In this way, information representing the occupant's likely mood, lifestyle, temperature and destination can be incorporated into the occupant characteristics. This semantic information can be used to increase the accuracy of selected preferences. In embodiments, multi-spectral imaging may be used to derive information associated with the properties of clothing materials to allow increased characterization. For example, an RGB/IR camera may be used to extract IR reflection characteristics of clothing in combination with visible light information to differentiate different clothing materials, weaves, and densities. This may thereby allow differentiation of different pieces of clothing having a similar colour in visible light. For instance, an occupant may have a thin black jacket and a thicker black jacket for colder weather. The IR spectral response from each may be different and hence the preferences selected by the system may be tailored depending on which of the occupant's black jackets is being worn.

According to a second aspect, there is provided a vehicle comprising the system according to any of the above statements.

According to a third aspect, there is provided a method of processing vehicle occupant data comprising: receiving information associated with a vehicle from a plurality of vehicle inputs, wherein at least one of the plurality of vehicle inputs includes input from an interior cabin camera; determining, from the plurality of vehicle inputs, one or more occupant characteristics associated with a vehicle occupant, wherein the one or more occupant characteristics include one or more clothing characteristics associated with a vehicle occupant determined by processing images from the interior cabin camera; building an occupant profile based on determined occupant characteristics, the occupant profile comprising occupant preferences associated with the one or more occupant characteristics; selecting an occupant preference from an occupant profile based on one or more determined occupant characteristics, wherein the occupant characteristic includes at least the one or more clothing characteristics.

In embodiments, the method further comprises the step of updating the occupant profile over time based on determined occupant characteristics.

According to a fourth aspect, there is provided a non-transitory computer readable medium comprising instructions which when carried out on a controller cause the controller to carry out the method according to any of the above statements.

### Brief Description of Drawings

Illustrative embodiments will now be described with reference to the drawings in which:
Figure 1 shows a schematic illustration of a system for processing vehicle occupant data according to an illustrative embodiment;
Figure 2 shows a schematic illustration of the controller of the system shown in Figure 1;
Figure 3a shows a first portion of an exemplary process flow for processing vehicle occupant data according to an illustrative embodiment;
Figure 3b shows a second portion of an exemplary process flow for processing vehicle occupant data according to an illustrative embodiment; and
Figure 3c shows a third portion of an exemplary process flow for processing vehicle occupant data according to an illustrative embodiment.

### Detailed Description

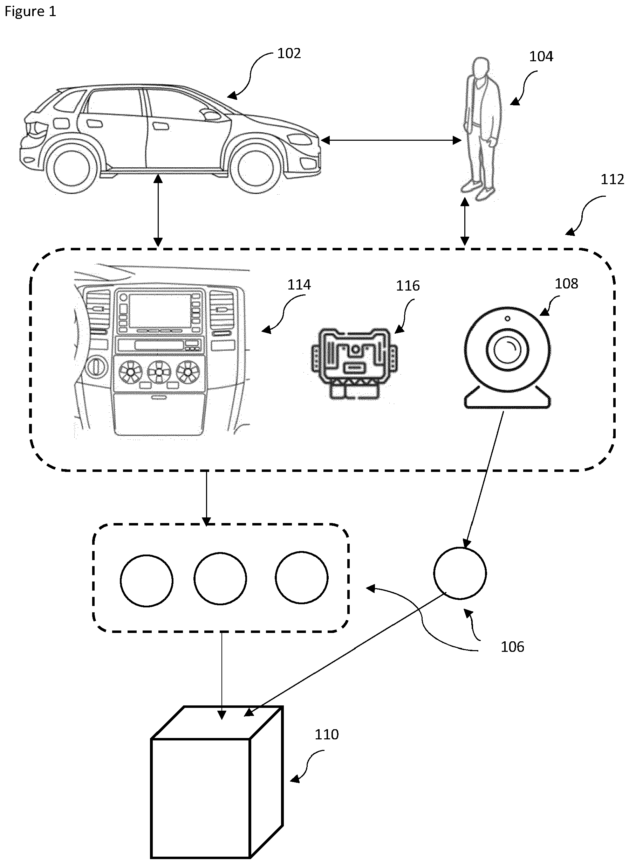

Figure 1 shows an exemplary system for processing vehicle occupant data associated with the occupant 104 of a vehicle 102. In this example, the system comprises a plurality of vehicle inputs 106. At least one of the vehicle inputs 106 includes an input from an interior cabin camera 108, such as a camera located within the vehicle 102 facing into the cabin of the vehicle 102. The system also comprises a controller 110. It will be noted that there are four inputs shown in Figure 1, however there may be any number of inputs.

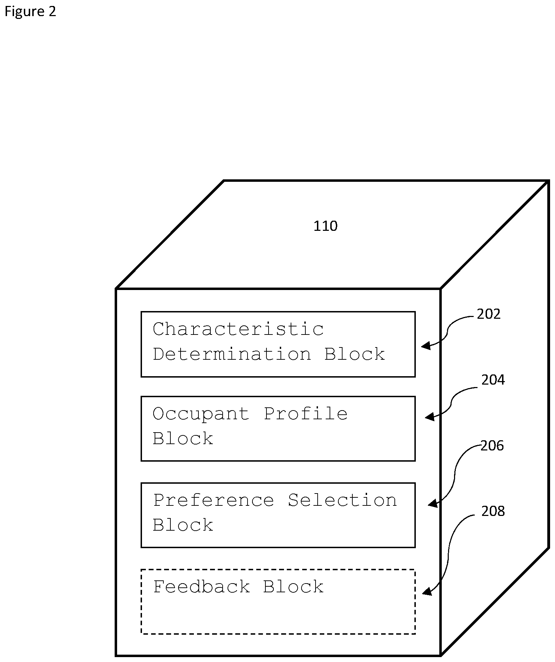

Figure 2 shows a detailed view of the controller 110. The controller 110 can process vehicle information from the plurality of vehicle inputs 106, and comprises functional blocks for performing processing functions. The functional blocks include but are not limited to: a characteristic determination block 202, an occupant profile block 204, and a preference selection block 206.

The characteristic determination block 202 can determine from the plurality of vehicle inputs 106, one or more occupant characteristics associated with the vehicle occupant 104. The one or more occupant characteristics include one or more clothing characteristics associated with the vehicle occupant 104 determined by processing images from the interior cabin camera 108. Whilst one occupant is shown in figure 1, the vehicle may contain a number of occupants. The characteristic determination block 202 can determine occupant characteristics associated with as many vehicle occupants as needed. The vehicle occupants may be present in the vehicle 102 at the same time as each other, or indeed the characteristic determination block 202 can determine occupant characteristics of successive vehicle occupants. For simplicity the description will refer to a singular occupant 104, however the disclosed system and method are applicable to a number of occupants as set out above.

The clothing characteristics of the vehicle occupant 104 can comprise information on the colour of one or more items of the occupant's clothing, the type of clothing article(s) worn by the occupant, such as whether the occupant 104 is wearing a shirt, a jacket, hat, etc., and the style of clothing worn by the occupant 104, such as formal, beachwear, sportswear, etc.

The occupant profile block 204 can build an occupant profile based on the determined occupant characteristics from the characteristic determination block 202 above. The occupant profile comprises occupant preferences associated with the one or more occupant characteristics. It is to be noted that the occupant profile block 204 may build multiple occupant profiles for respective multiple occupants, but can also build an occupant profile for occupants of the vehicle overall, such that the occupant profile block 204 can build a profile for occupants of the vehicle in general, and indeed it may perform both of these functions simultaneously.

The preference selection block 206 can select an occupant preference from an occupant profile based on one or more occupant characteristics determined by the characteristic determination block 202. The occupant characteristic includes at least the one or more clothing characteristics.

The occupant preference may be derived from an association within the occupant profile of the occupant characteristic to a particular setting or operation. Thus, the preference may be a preference that the occupant 104 has for a vehicle or other setting which is associated with an occupant characteristic (including the occupant clothing characteristics), such as interior lighting, a music playlist to be played, an internal temperature, a destination to be set in a satellite navigation system. That is, the occupant preference may be determined as "the occupant is wearing a jacket and so they would like the interior temperature to be above 22 degrees" as a purely exemplary preference. In one example, the system may detect a specific jacket that the occupant is wearing frequently and can link this to certain vehicle settings (e.g. preferred temperature when this jacket is worn). In embodiments, the setting may also be a setting outside the vehicle, such that if the intended destination is determined as a preference, the destination may be contacted remotely with a setting applicable to the destination, or alternatively, an occupant's smart lights in their home or work may also be set based on the occupant preferences.

The above means that in some cases, the occupant preferences are associated with vehicle settings and the occupant profile associates the one or more occupant characteristics with vehicle information from at least one other vehicle input 106, indicating a vehicle setting.

Alternatively, or in addition, the occupant preference may be derived from extrapolating the occupant profile. Thus the preference may be a preference that the occupant 104 has related to the occupant characteristics. That is, the occupant preference may be a preference for a certain type or colour of clothing, may be a preference for a certain type of music, or the like. That is, the occupant preference may be determined as "the occupant 104 likes to wear green", as a purely exemplary preference.

The occupant profile block 204 updates the occupant profile over time based on determined occupant characteristics, and the preference selection block 206 selects an occupant preference based on one or more currently detected occupant characteristics. That is, the occupant profile is a profile determined from patterns of characteristics of the occupant. Based on this, the preference selection block 206 can determine a current likely preference based on the occupants current clothing characteristics, so that the preference is tailored to the occupant's current state or mood. Therefore, whilst the occupant profile contains historic occupant characteristics, the preference can associate current characteristics with matching elements of the profile. As such, the preference selection block 206 selects the occupant preference by comparing a determined clothing characteristic to the occupant profile to select an occupant preference from the occupant profile. It is also envisaged that in some cases the preference selection block 206 can undertake an ad-hoc comparison of determined occupant characteristics to derive further preferences. For example, assumptions may be used to select preferences when new types of clothing or colours are identified.

Referring briefly back to Figure 1, the source of a plurality of vehicle inputs are shown in box 112 with internal cabin camera 108, and a number of inputs are derived from a console of the vehicle. These further inputs 106 derived from the console can include inputs from a user interface 114 of the vehicle 102 and determinations from a computer or ECU 116 of the vehicle. Further, although not shown explicitly in Figure 1, inputs 106 can be from an audio sensor, a temperature sensor, a clock, a location service, a vehicle destination input, a further interior cabin camera and/or an exterior camera, and other suitable sources.

The preference selection block 206 in Figure 2 can be configured to generate a command for the selected occupant preference, and can transmit the command such that one or more vehicle settings of the vehicle 102 can be set. The generated command may therefore be, in the example discussed above, set the internal temperature to 22 degrees. The generated command can be applied to any vehicle settings at different granularities. For instance, the preference selection block 206 may generate a command such as "apply vehicle settings for occupant A", or may generate a command such as "apply interior colour C to the vehicle interior", or may generate a command such as "determine interior temperature, operate heating relay for x seconds, determine interior temperature, reduce heating, etc". Thus the preference selection block 206 may instruct a vehicle computer 116 to operate according to the occupant preference, or may resolve the occupant preference into discrete commands to enact the occupant preference itself. In some instances therefore, the preference selection block 206 may be part of the vehicle computer 116, and may include functional processing capabilities to carry out the control of the vehicle 102, or may pass these to functional processing blocks elsewhere in the vehicle computer or ECU 116.

The controller 110 may further comprise a feedback block 208 for analysing one or more vehicle inputs to identify a user's response to the generated command. For instance, the occupant 104 may respond to the vehicle setting set by the generated command by adjusting the setting. In the above examples, the occupant 104 may dim the interior lights in response to their being set, or may decrease the temperature in the cabin. The feedback block 208 allows for this information to be captured.

The occupant's response to the generated command can form one of the occupant characteristics. Accordingly, the response to the generated command can form one of inputs used by the characteristic determination block 202 to determine characteristics of the occupant 104. The occupant's response may be therefore input via for instance the vehicle console 114 or may be derived from an audio sensor in the vehicle. For instance, the characteristic determination block 202 may determine speech from an audio sensor via one of the inputs 106 which expresses dissatisfaction with the generated command.

The preference selection block 206 can generate a report based on the stored occupant profile for transmission to an external server. For instance, the occupant profile report may be stored externally to the vehicle 102, or the entire occupant profile may be stored externally to the vehicle 102 and updated via the report. The report therefore can inform other devices, users or systems about the occupant of the vehicle 102. As set out above, the preference selection block 206 contains associations regarding the occupant's preferences, which can be extrapolated to determine future actions that the occupant 104 may like to take. The report therefore also contains information about the occupant 104 which can be used to direct the occupant 104 towards these actions.

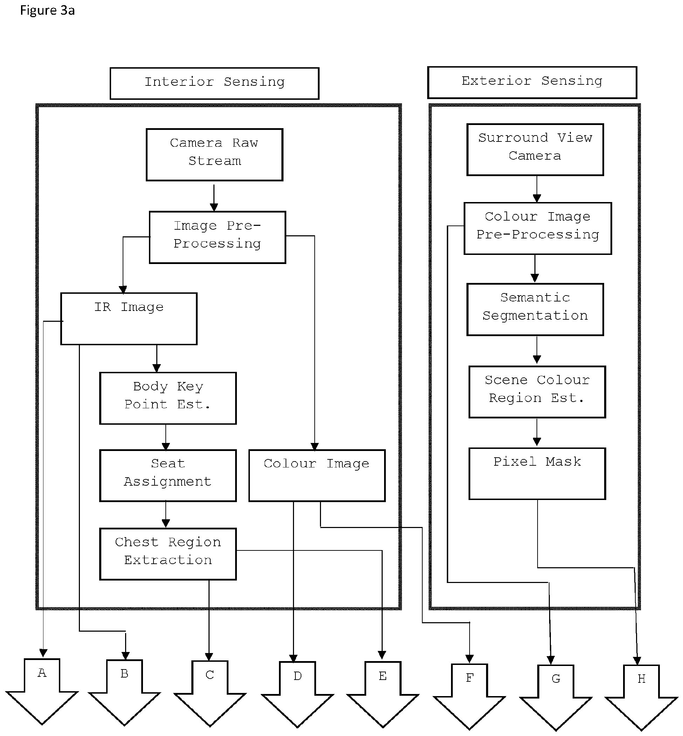

Figures 3a to 3c show an exemplary process flow diagram of a vehicle occupant data processing method compatible with the system described above.

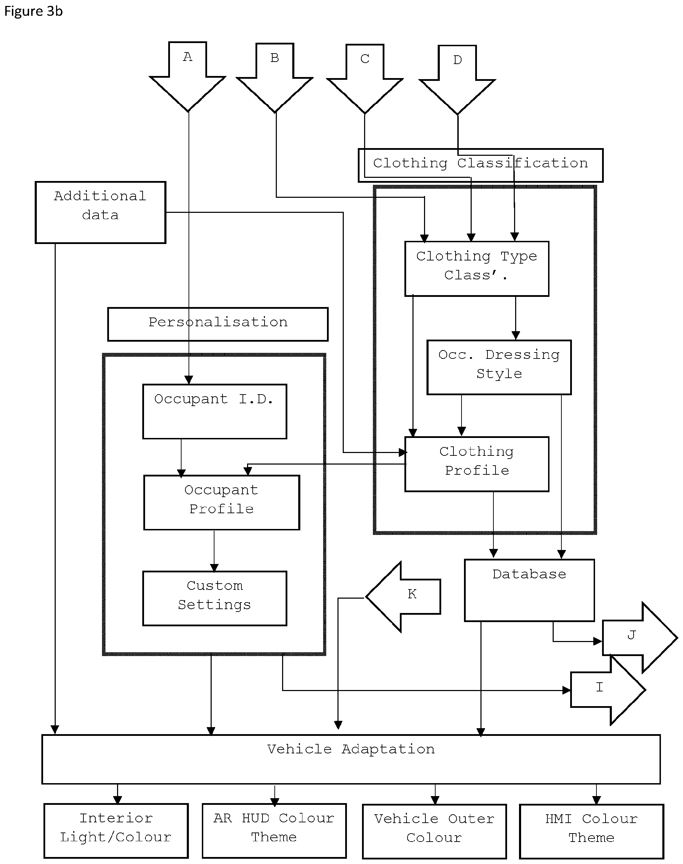

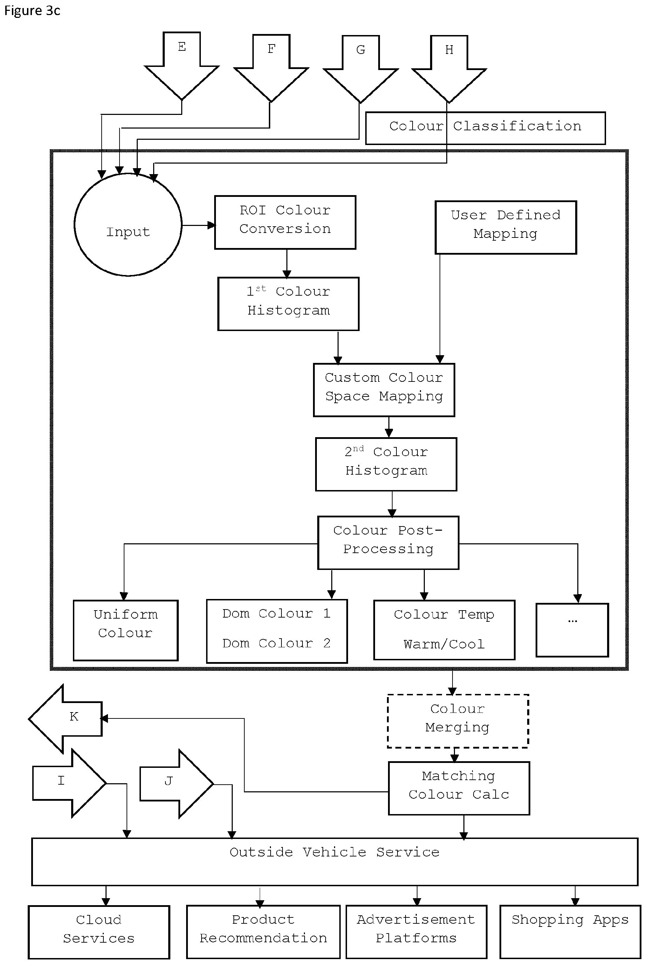

Figure 3a shows a first set of operations according to an interior sensing module. In the interior sensing module, raw camera data is provided from an interior cabin camera 108. The raw camera data may be data from an RGB-IR camera that can output alternating colour and Infrared images. The camera may use active illumination to record the images. Each image is pre-processed at the next step. The pre-processed IR image is output to outputs A and B (continued in Figure 3b) and the pre-processed colour image is output to outputs D and F (continued in Figures 3B and 3c). These outputs may correspond to the inputs 106 to the controller 110. Alternatively, the raw data may correspond to the inputs 106 to the controller, and the controller 110 may contain further functional blocks comprising the interior and exterior sensing modules (not shown).

The interior sensing module can detect occupants 104 in the cabin of the vehicle 102 and track their body parts on the IR image. Based on an estimation of key points of the body, such as the shoulder and hip points, and based on determination of an occupant being present in one or more seats, a region of interest is extracted that contains the upper body/ chest region for each seat assignment. In one variant the region is derived as the polygon derived from connecting shoulder and hip points. In another variant the body is segmented from the background to allow for pixel-level masking of the input image (pixel mask). The output of the chest region extraction is passed to outputs C and E (continued in Figures 3b and 3c). These outputs may correspond to the inputs 106 to the controller 110. Alternatively, the raw data may correspond to the inputs 106 to the controller, and the controller 110 may contain further functional blocks comprising the interior and exterior sensing modules (not shown).

Also shown in Figure 3a is an optional exterior sensing module. The exterior sensing module uses information from a surround view camera. For the purposes of the desired outcome of the system, an RGB camera is suitable for the surround view camera, however if tracking or detection of objects were required then an IR-RGB camera can be used as the surround view camera.

The exterior sensing module pre-processes the colour image. The pre-processed colour image is output to output G (continued in Figure 3C) and performs semantic segmentation on the image to separate regions of colour interest from other regions captured in the image. For instance, it may be desired to set a vehicle setting based on the colour of a portion of the environment of the vehicle. For example, the semantic segmentation may ignore all pixels related to the sky, pavement and other cars and focus only on roadside buildings. As another example the scene could be segmented into a background and foreground based on a class configuration, and one of the two segments, such as the foreground segment can be passed to scene colour region estimation.

In scene colour region estimation, the colour of the segment of interest is estimated, and at the next step a pixel mask is applied over the scene. The output of the pixel mask is output to output H (continued in Figure 3c). These outputs G and H may correspond to the inputs 106 to the controller 110. Alternatively, the raw data may correspond to the inputs 106 to the controller, and the controller 110 may contain further functional blocks comprising the interior and exterior sensing modules (not shown).

Figure 3b deals with outputs A to D. In Figure 3b a personalisation module receives an input from output A - the pre-processed IR image. The personalisation module can Identify the occupant or occupants and load an occupant profile based on the identification. The personalisation module can then load custom settings based on the occupant profile. The output of the personalisation module can then be passed to a vehicle adaptation block, described later, and also to output I. The personalisation module may correspond to occupant profile block 204 and may enable the controller build an occupant profile based on the determined occupant characteristics from the characteristic determination block 202.

The occupant profile can be maintained and associated with the identification of a given person ,i.e. using facial recognition or by another authentication method such as PIN entry or fingerprint. The occupant profile may store colour information for the occupant, and this can be used to derive favourite colours of the occupant based on colour history, to derive colours which are rarely or never worn by the occupant, to store additional information on the occupant preferences such as lighting settings, to store occupant specific colour mappings. Further this information can be used to align the colour scheme of the vehicle with a profile or preferences from a mobile device, and to also align the colour scheme of the vehicle with other smart home lighting devices, or vice versa.

Figure 3b also shows a clothing classification module. The inputs to the clothing classification module are from outputs B, C and D, the pre-processed IR image, extracted chest region, and pre-processed colour image respectively. Based on these inputs the clothing type can be classified for each occupant, such as which labels or brands and colours the occupant wears, whether the clothes are sporty, businesslike, elegant, fancy, extravagant, etc. this can be carried out by machine learning methods whilst the car is being driven. The dressing styles of each occupant can then be determined, and finally a clothing profile for each occupant can be loaded. It will be noted that additional data can be input to the clothing profile and also into the vehicle adaptation block. The additional data may be data such as time of day, location, destination, music playlist, weather, vehicle state, taken from vehicle inputs. The clothing classification module may correspond to characteristic determination block 202 and may enable the controller to determine from the plurality of vehicle inputs 106, one or more occupant characteristics associated with a vehicle occupant 104, bearing in mind that additional data can be provided to the clothing classification block which may also be encompassed by the characteristic determination block 202.

The clothing profile for the or each occupant can be updated over multiple uses of the vehicle, and may contain information about what the occupant wears for what occasions. This can be classified based on the time of data and destination for various occasions, such as whether it is a work week, the weekend, after or before work or vacation. Information can also be derived based on what the occupant does not wear, such as by amalgamation of information from multiple occupants of multiple vehicles to determine what an occupant does not wear but might like to wear based on the clothes they do wear.

Both the occupant dressing style and clothing profile can be loaded or transmitted to a database which may be external, such as in the cloud or on a dedicated external server. The clothing profile may be fed, either via the database or directly, to the vehicle adaptation block, and also to output J. The vehicle adaptation block may correspond to at least a portion of the preference selection block 206.

A further input to the vehicle adaptation block is input K which will be described with reference to Figure 3c.

Examples of vehicle adaptations that can be made based on the inputs to the vehicle adaptation block are changes to the interior lights or colour of the interior lights, which may be based on the style of clothing worn by the occupant, or the colour of the clothing, or indeed the additional information. A further example is changes to an augmented reality heads up display colour or theme, the outside colour of the vehicle, and a colour theme of the human machine interface of vehicle console. Adaptations can also be made based on the seasons, by using the date and time information available as additional data, and adaptations can be made for example to reflect or contrast with an exterior environment which contains a lot of artificial lighting or darkness. The user can feedback to the vehicle their reaction to any of the adaptations made by the vehicle adaptation block.

It will be appreciated that whilst the modules of figure 3b have been mapped onto the functional blocks of the controller 110, the modules may be arranged differently to those shown depending on the requirements of the functional blocks of the controller 110.

Turning to Figure 3c, a colour classification module is shown. Outputs E to H are provided as inputs to the colour classification module. The input block takes the input as either a full colour image in the RGB colour space or a pixel mask. It is noted that inputs E and F come from the interior sensing module and the inputs G and H come from the exterior sensing module. As such, the colour classification module is applied to both sets of images to provide outputs to the vehicle adaptation block and the outside vehicle service block based on both interior and exterior images. The colour classification module may correspond to a portion of characteristic determination block 202 and may enable the controller to determine from the plurality of vehicle inputs 106, one or more occupant characteristics associated with a vehicle occupant 104, bearing in mind that additional steps are provided outside the colour classification module which may also be encompassed by the characteristic determination block 202.

The input of the colour classification module is in the RGB colour space. All of the pixels in the given region of interest (ROI) are selected and converted from the YUV colour space to the HSV colour space. Alternative colour representations could also be used.

At the next step, a first colour histogram based on these selected pixels is calculated in a dense colour space. In one variant only the hue channel is considered. In another variant all 3 channels are considered. At the subsequent step the histogram entries are mapped using a custom mapping function. The mapping function can be derived, for example, based on a calibration data set that contains many different colours, and where human subjects are asked to assign these colours to a set of discrete colours based on the closest possible distance according to their colour perception. In another variant the mapping is based on an objective, mathematical distance metric in HSV or other colour space (e.g. CIE La*b*).

Entries in the first histogram are then mapped via the colour space mapping function and inserted into a second colour histogram in a sparse colour space. This is superior to a single step approach that directly maps the measured colours to human space, since the target colour palette may not be regular. Colour metric can misclassify colours which are between different halftones of two colours. So it is better to classify initially in a regular space and then compress according to subjective preference.

Next in a colour post-processing step, the second histogram is analysed, for example, if there is a single peak that suggests a uniform colour, or multiple peaks that suggest more colourful clothing. The top N dominant colours can be also computed together with a confidence score. In addition, the colour temperature can be classified, for example, into discrete classes (warm, cool, neutral). Further statistics and information can be derived based on the discrete colour histogram.

If there a multiple occupants of the vehicle, then the procedure is repeated for all passengers in the cabin, or for a subset such as only occupants in the front seats, or other configurable subset. The colour information is then merged for the multiple occupants, for example by building one common histogram and running the colour post-processing on the combined histogram. Merging only takes place if more than one occupant is in the cabin.

The output from the colour classification module is passed to a matching colour calculation block, where a matching colour is computed based on the information from previous step. In one variant this can be realised by a look up table. In another variant it is a mathematical function of the input information. In another variant a neural network or other machine learning model is used as a transfer function.

The output of the matching colour calculation is passed to an outside vehicle service block, and to output K provided as an input to the vehicle adaptation block in Figure 3b. Also provided to the outside vehicle service block are inputs from outputs I and J from figure 3b, referring to outputs from the database and the personalisation module respectively. Because of the exchange between outputs I, J and K, the vehicle adaptation block and the outside vehicle service block have substantially all of the information from the various modules and blocks. The outside vehicle service block may correspond to at least a portion of the preference selection block 206.

The outside vehicle service block can use the information above to render cloud services to the occupant of the vehicle, to provide product recommendations to the occupant of the vehicle, to provide advertisement platforms with information relating to the occupant, and to prompt shopping apps on the occupant's mobile device, laptop, or with an application store with the determined information from the occupant. The user can feedback to the vehicle their reaction to any of the recommendations made by the outside vehicle service block.

It will be appreciated that whilst the modules of figure 3c have been mapped onto the functional blocks of the controller 110, the modules may be arranged differently to those shown depending on the requirements of the functional blocks of the controller 110.

The invention as described above can be implemented entirely or in part in a vehicle 102. Further, a method for achieving the invention, comprising carrying out the steps of the functional blocks of the controller 110 can also be implemented as part of the invention. Further still, the method may be implemented as computer program code stored on a non-transitory computer readable medium which would cause a processor or controller to carry out the method according to the invention.

It will be understood that the embodiments illustrated above show applications only for the purposes of illustration. In practice, embodiments may be applied to many different configurations, the detailed embodiments being straightforward for those skilled in the art to implement.

## Claims

1. A system for processing vehicle occupant data, the system comprising:
a plurality of vehicle inputs for receiving information associated with the vehicle, wherein at least one of the plurality of vehicle inputs includes an input from an interior cabin camera;
a controller for processing the vehicle information from the plurality of vehicle inputs, and comprising functional blocks for performing processing functions, the functional blocks comprising:
a characteristic determination block for determining, from the plurality of vehicle inputs, one or more occupant characteristics associated with a vehicle occupant, wherein the one or more occupant characteristics include one or more clothing characteristics associated with a vehicle occupant determined by processing images from the interior cabin camera;
an occupant profile block for building an occupant profile based on determined occupant characteristics, the occupant profile comprising occupant preferences associated with the one or more occupant characteristics; and
a preference selection block for selecting an occupant preference from an occupant profile based on one or more occupant characteristics determined by the determination block, wherein the occupant characteristic includes at least the one or more clothing characteristics.

2. A system according to claim 1, wherein the occupant profile block updates the occupant profile over time based on determined occupant characteristics, and the preference selection block selects an occupant preference based on one or more currently detected occupant characteristics.

3. A system according to any preceding claim, wherein the plurality of vehicle inputs further comprises inputs from at least one of a user interface of the vehicle, an audio sensor, a temperature sensor, a clock, a location service, a vehicle destination input, a further interior cabin camera and/or an exterior camera.

4. A system according to any preceding claim, wherein the occupant preferences are associated with vehicle settings and the occupant profile associates the one or more occupant characteristics with vehicle information from at least one other vehicle input indicating a vehicle setting.

5. A system according to any preceding claim, wherein the preference selection block selects the occupant preference by comparing a determined clothing characteristic to the occupant profile to select an occupant preference from the occupant profile.

6. A system according to any preceding claim, wherein the preference selection block is configured to generate a command for the selected occupant preference.

7. A system according to claim 6, wherein the preference selection block is configured to transmit the command for controlling one or more vehicle settings of the vehicle.

8. A system according to claim 6 or 7, wherein the controller further comprises a feedback block for analyzing one or more vehicle inputs to identify a user's response to the generated command.

9. A system according to claim 8, wherein one of the occupant characteristics determined from at least one of the plurality of vehicle inputs comprises the user's response to the generated command.

10. A system according to any preceding claim, wherein the preference selection block is configured to generate a report based on the stored occupant profile for transmission to an external server.

11. A system according to any preceding claim, wherein the clothing characteristics comprise at least one of: clothing colour, clothing type, and clothing style.

12. A vehicle comprising the system according to any of claims 1 to 11.

13. A method of processing vehicle occupant data comprising:
receiving information associated with a vehicle from a plurality of vehicle inputs, wherein at least one of the plurality of vehicle inputs includes input from an interior cabin camera;
determining, from the plurality of vehicle inputs, one or more occupant characteristics associated with a vehicle occupant, wherein the one or more occupant characteristics include one or more clothing characteristics associated with a vehicle occupant determined by processing images from the interior cabin camera;
building an occupant profile based on determined occupant characteristics, the occupant profile comprising occupant preferences associated with the one or more occupant characteristics;
selecting an occupant preference from an occupant profile based on one or more determined occupant characteristics, wherein the occupant characteristic includes at least the one or more clothing characteristics.

14. A method according to claim 13, further comprising the step of updating the occupant profile over time based on determined occupant characteristics.

15. A non-transitory computer readable medium comprising instructions which when carried out on a controller cause the controller to carry out the method according to any of claims 13 or 14.
